# DEMANDE DE BREVET EUROPEEN

(11) **EP 1 785 821 A2**
(43) Date de publication de la demande: **16.05.2007**
(21) Numéro de dépôt: 06300973.2
(22) Date de dépôt: 22.09.2006
(51) Int. Cl.: G06F 3/044

(54) **Capteur capacitif pour détecter un doigt pour une opération de contrôle et/ou de commande**

(30) Priorité: 28.10.2005 FR 0553282
(71) Demandeur: Jaeger Controls, 28002 Chartres Cedex (FR)
(72) Inventeur: AKEL, Dominique, 75116, Paris (FR); LOMP, Stéphane, 28300, Bercheres Saint Germain (FR)
(74) Mandataire: Herrburger, Pierre

(57) **Abrégé**

Capteur capacitif pour détecter un doigt pour une opération de contrôle/de commande.

Il comprend une couche isolante électrique (11) formant une surface de détection (S) munie de repères de position pour y appliquer le doigt (DG) et induire un signal par positionnement ou déplacement du doigt ; une couche capacitive (12) couverte par la couche isolante (11) et formée d'un empilage (121) d'une alternance de tranches conductrices (Pi) et de tranches non-conductrices (Si) placé sur chant, au moins certaines des couches conductrices (Pi) étant reliées à des contacts élémentaires (CAi) pour former des parties de condensateurs (PCi), réparties en cellules (Cn). La capacité de tous les condensateurs d'une cellule est additionnée dans le signal fourni par la cellule (Cn). Un circuit de traitement (2) relié aux connecteurs de cellule (Zn) des cellules capacitives (Cn) reçoit les signaux capacitifs (Sn) pour les évaluer, les comparer et déterminer s'ils correspondent à la présence d'un doigt, et déterminer la nature du doigt.

## Description

### Domaine de l'invention

La présente invention concerne un capteur capacitif longitudinal élastique pouvant prendre différentes formes pour détecter une empreinte digitale ou le diamètre d'un doigt pour une opération de contrôle/de commande.

### Etat de la technique

Il existe des commandes capacitives fonctionnant selon le principe tout/rien, c'est-à-dire en logique binaire, permettant de mettre en marche un appareil en général électrique ou de l'arrêter.

Du fait même de l'utilisation de telles commandes capacitives, les moyens pour sa réalisation sont en général de dimensions relativement importantes, assimilables à la taille de l'empreinte d'un doigt. De telles commandes sensitives travaillant par effet capacitif sont par exemple utilisées pour la commande d'ascenseurs ou autres équipements de ce type ; à chaque étage, et plus généralement à chaque fonction de l'ascenseur, est associée une touche sensitive mise en oeuvre par le simple contact d'un doigt. Mais de telles touches ne permettent pas une commande progressive de par l'importance de l'encombrement du capteur.

### But de l'invention

La présente invention a pour but de développer un capteur sensitif permettant une commande progressive de la fonction à laquelle est associé ce capteur, par exemple la commande d'un équipement électrique dont on veut régler la puissance consommée/fournie comme par exemple une plaque de cuisson électrique, la température d'un four, la température d'un radiateur ou autres équipements de ce type.

Ce capteur doit permettre une détection non contraignante, c'est-à-dire en rapport avec les fonctions des contrôles qu'il doit effectuer. Ainsi, il doit pouvoir recevoir la trace d'un doigt sans nécessiter un positionnement obligatoirement très précis du doigt sur la surface de la surface de détection. Il doit également permettre en plus et en aval du contrôle, l'exécution d'une commande par exemple, la mise en route d'un appareil ou le réglage de la puissance de fonctionnement de celui-ci en interprétant le déplacement du doigt comme simulant le déplacement d'un curseur.

### Exposé et avantages de l'invention

A cet effet, l'invention concerne un capteur capacitif du type défini ci-dessus, caractérisé en ce qu'il comprend
A- une couche isolante électrique formant une surface de détection munie de repères de position pour y appliquer le doigt et induire un signal par positionnement ou déplacement du doigt,
B- une couche capacitive couverte par la couche isolante et formée d'un empilage d'une alternance de tranches conductrices et de tranches non-conductrices placé sur chant, au moins certaines des couches conductrices étant reliées à des contacts élémentaires pour former des parties de condensateurs, réparties en cellules, les contacts élémentaires étant reliés en parallèle à un connecteur de cellule, un condensateur élémentaire étant complété par la surface du doigt appliquée sur la couche isolante pour former un condensateur, la capacité de tous les condensateurs d'une cellule étant additionnée dans le signal fourni par la cellule,
C- un circuit de traitement auquel sont reliés les connecteurs de cellule des cellules capacitives, recevant les signaux capacitifs pour les évaluer, les comparer et déterminer s'ils correspondent à la présence d'un doigt, et déterminer la nature du doigt.

Un capteur capacitif selon l'invention destiné à détecter un doigt pour une opération de contrôle ou de commande d'un appareil, par exemple pour autoriser l'utilisation d'un appareil électroménager, pour éviter que celui-ci ne soit mis en route par un enfant. Ce capteur capacitif n'est pas destiné à reconnaître une empreinte digitale mais simplement à pouvoir distinguer le doigt d'un adulte du doigt d'un petit enfant. Cette distinction repose sur la surface de contact entre le doigt appuyé sur la surface de détection du capteur, suivant qu'il s'agit d'un enfant ou d'un adulte. Le capteur capacitif ne doit pas non plus pouvoir être trompé par la trace de plusieurs doigts appliqués sur la surface de détection et qui pourraient être interprétées comme correspondant à la surface d'un doigt d'adulte.

Ce capteur capacitif de dimensions ou d'encombrement réduits, s'intégrant facilement dans un tableau de commande ou dans un appareil commandé, permet non seulement l'envoi d'un signal marche/ou arrêt, mais également l'envoi d'un grand nombre de signaux en fonction du mode d'action du doigt sur le capteur capacitif, soit la position du doigt à tel ou tel endroit repéré du capteur capacitif, soit un déplacement entre deux ou plusieurs positions.

Un tel capteur capacitif s'utilise avantageusement pour la commande d'une plaque de cuisson, par exemple pour en régler la température ou la puissance de chauffe.

Ce capteur capacitif placé sous un isolant du type verre a l'avantage d'assurer une isolation électrique complète entre l'équipement auquel il est associé et l'utilisateur. Une telle isolation est particulièrement utile pour des applications entre des équipements de cuisines ou des situations analogues car l'utilisateur peut commander l'appareillage électrique même avec les doigts mouillés sans risquer le déclenchement intempestif d'une protection électrique telle qu'un disjoncteur ou sans risque électrique pour lui en cas de protection électrique insuffisante ou défectueuse de l'équipement.

La commande peut se faire par tout ou rien, c'est-à-dire par marche/arrêt. La commande peut également être associée à un réglage progressif assimilable à un fonctionnement de curseur, par exemple par déplacement du doigt le long de la surface de détection du capteur.

L'évolution du réglage se contrôle sur un écran (par exemple la température de consigne), qui se corrigera par le simple déplacement dans un sens ou dans l'autre du doigt sur le capteur.

Le capteur permet non seulement de générer un signal de commande d'une fonction particulière mais également d'assurer la protection de son utilisation vis-à-vis d'enfants. Cela est important pour des équipements de cuisines telles que des plaques de cuisson, fours ou équipements de ce genre. Le capteur peut en effet, par sa conception et son traitement, déceler le diamètre de l'organe de commande sur le capteur. En cas de surface insuffisante correspondant à la position d'un doigt d'enfant sur le capteur, le système refusera l'accès à la fonction à commander.

Suivant une caractéristique avantageuse, la surface de détection est constituée par une plaque isolante. Cette plaque isolante peut comporter des inscriptions et les repères d'actionnement du capteur tels qu'une indication de puissance.

De façon avantageuse, l'empilage de couches conductrices et de couches non-conductrices est constitué par un élastomère segmenté par des couches conductrices.

Les couches conductrices sont avantageusement formées d'un élastomère chargé de carbone.

Suivant une autre caractéristique avantageuse, le circuit de traitement n'exploite que les signaux venant de cellules adjacentes.

Suivant une autre caractéristique avantageuse, les contacts élémentaires sont fusionnés dans le connecteur qui couvre et touche une succession de couches conductrices d'une cellule.

Suivant une autre caractéristique avantageuse, les connecteurs des cellules sont identiques.

Suivant une autre variante, les connecteurs des cellules ont une surface identique.

### Dessins

La présente invention sera décrite ci-après de manière plus détaillée à l'aide de différents modes de réalisation d'un capteur capacitif selon l'invention représentés à échelle très agrandie dans les dessins annexés dans lesquels :
- la figure 1 est un schéma d'ensemble du capteur capacitif selon l'invention,
- la figure 2A est une vue de dessus partielle d'un mode de réalisation du capteur,
- la figure 2B est une vue en coupe du capteur de la figure 2A,
- la figure 2C est un schéma équivalent du capteur des figures 2A, 2B,
- la figure 3A est une vue de dessus partielle d'un autre mode de réalisation du capteur,
- la figure 3B est une vue en coupe partielle du capteur de la figure 3A,
- la figure 4A est une vue de dessus partielle d'un autre mode de réalisation d'un capteur selon l'invention,
- la figure 4B est une vue de dessus du connecteur élémentaire d'une cellule du capteur de la figure 4A.

### Description d'un mode de réalisation

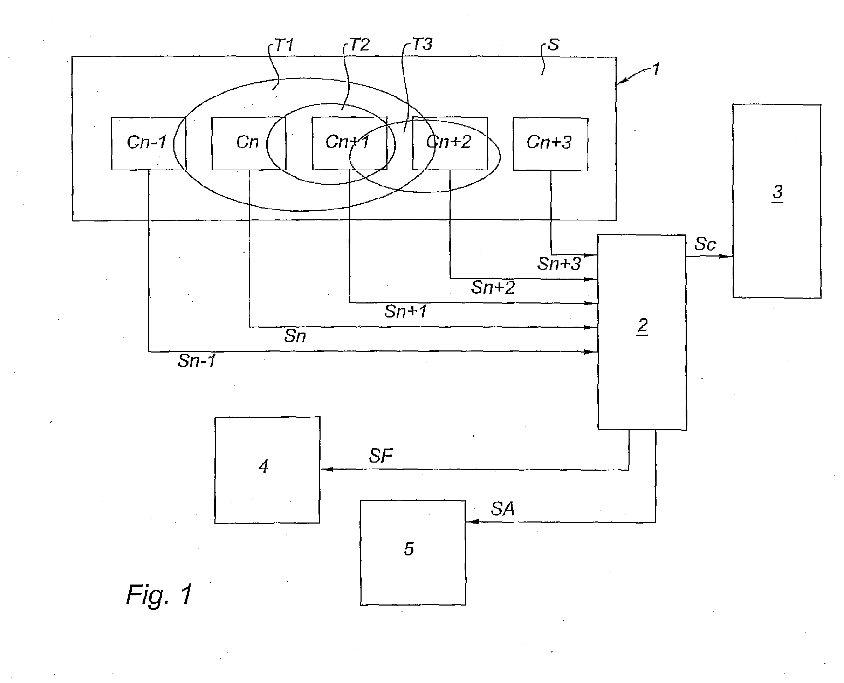

Selon la vue schématique en coupe de la figure 1, l'invention concerne un capteur destiné à permettre un contrôle ou l'émission d'un signal de commande de type « tout ou rien » ou progressif, pour commander un appareil, notamment un appareil électrique tel qu'un équipement de cuisine fonctionnant simplement par sa mise en marche ou son arrêt ou encore un équipement susceptible de fonctionner de manière réglée, selon un programme fixe ou sélectionné ou une commande progressive comme par exemple une plaque de cuisson, un four, une machine à laver le linge ou la vaisselle, un variateur d'éclairage, un système de réglage de température d'une chaudière. De multiples autres applications sont envisageables.

Le capteur 1, se compose d'une surface de détection S sur laquelle on applique le doigt selon une procédure définie : simple touché, maintien du doigt pendant une durée variable définissant un paramètre de fonctionnement de l'appareil commandé pour générer le signal de commande par « tout ou rien » ou un réglage continu. Cette surface de détection S est munie de repères pour positionner le doigt à un emplacement fixe ou de repères constituant des limites de déplacement du doigt correspondant à des plages de réglage. Plusieurs emplacements peuvent également être combinés avec des fonctions différentes, les uns servant à un réglage par tout ou rien, les autres à un réglage progressif. Le capteur 1 est relié à un circuit de traitement 2 qui exploite son signal pour former le signal de commande SC destiné à l'appareil à commander 3 et le cas échéant un signal de fonctionnement SF et un signal d'affichage SA.

Le signal de fonctionnement SF commande un générateur 4 émettant un son, un message vocal ou un signal lumineux pour confirmer que le doigt DG a bien actionné le capteur 1 ou indiquer la fonction commandée.

Le signal d'affichage SA est transmis à un afficheur 5 qui indique la bonne utilisation du capteur 1 en parallèle ou en remplacement du signal émis par le générateur 4, en affichant directement une information confirmant le fonctionnement du capteur 1 et l'entrée du signal par le doigt DG.

L'afficheur 5 affiche une information de fonctionnement demandée par l'action du doigt sur le capteur :
- la mise en marche ou l'arrêt de l'appareil 3,
- le programme de fonctionnement choisi,
- le menu pour la sélection d'un mode de fonctionnement,
- le paramètre de fonctionnement de l'appareil 3.

Le circuit de traitement 2, non détaillé, comprend les moyens informatiques et/ou des circuits notamment électroniques pour traiter le signal fourni par le capteur 1, le reconnaître, le valider, l'interpréter et générer le signal de commande SC et le cas échéant les signaux SF et SA.

De manière plus détaillée, le capteur capacitif 1 se compose d'une surface de détection S figurée par un rectangle et à l'intérieur de laquelle se trouvent des cellules capacitives Cn (n=1 ...) disposées dans une certaine orientation, par exemple alignées. Ces cellules capacitives Cn fournissent chacune un signal de détection Sn dont l'ensemble constitue le signal global du capteur appliqué au circuit de traitement 2. Celui-ci analyse les signaux Sn, les compare à des références et, en fonction de cette analyse, il émet le signal de commande ou de validation Sc pour commander l'appareil 3, le signal d'affichage Sa pour l'afficheur 5 ou le signal SF pour le générateur 4.

Le signal Sn de la cellule capacitive Cn dépend de la surface couverte par la trace du doigt. La figure 1 montre trois exemples de trace de doigt T1, T2, T3 suivant que le doigt est appuyé plus ou moins fortement contre la surface de détection et suivant la taille du doigt

Ainsi, la trace T1 couvre en totalité les cellules capacitives Cn, Cn+ 1 et partiellement seulement les cellules Cn-1 et Cn+2. Les signaux Sn, Sn+ 1 et Sn-1, Sn+2 transmis au circuit de traitement 2 traduisent cette situation.

Dans le cas de la trace T2 représentant l'action d'un petit doigt ou d'un doigt faiblement appuyé, seule la cellule Cn+ 1 est quasiment couverte par la trace alors que la cellule Cn n'est couverte qu'à moitié. Les autres cellules ne sont pas couvertes.

Dans le cas de la trace T3, la cellule Cn+2 est pratiquement couverte alors que la cellule Cn+ 1 n'est couverte que pour moins de la moitié de sa surface. Les cellules non couvertes par une trace ne fournissent aucun signal ou un signal nul. Comme le circuit 2 reçoit le signal global formé des signaux Sn de chaque cellule Cn, il pourra repérer la position de doigt grâce aux signaux nuls entre lesquels se trouvent les signaux non nuls représentatifs de la trace du doigt. Dans le présent exemple, la trace T3 donne des signaux non nuls Sn+1, Sn+2 compris entre d'une part, les signaux nuls Sn-1, Sn et d'autre part, le signa nul SN+3.

Le circuit de traitement 2 applique des critères d'appréciation aux signaux Sn, les prenant en compte séparément ou globalement. Il vérifie tout d'abord que les signaux reçus correspondent bien à des cellules capacitives jointives et qu'il n'y a pas d'intervalle libre significatif entre les cellules de manière à éviter d'interpréter deux petites traces non jointives comme représentant la trace d'un grand doigt.

Un autre critère d'appréciation est celui de la surface de la trace détectée. Cette surface est comparée à un seuil minimum représentant la différence entre la trace d'un doigt d'enfant et celle d'un adulte. D'autres critères de plausibilité sont également applicables, par exemple un seuil supérieur pour éviter qu'une trace autre que celle d'un doigt ne soit interprétée comme la trace d'un doigt.

Outre ce contrôle statique de la trace, le circuit de traitement 2 peut également effectuer un contrôle dynamique pour en déduire des informations et des signaux de commande.

Ainsi, suivant la fonction du capteur capacitif, celui-ci n'est pas seulement destiné à détecter et à vérifier la trace d'un doigt mais également à recevoir des instructions transmises sous la forme de traces de doigt. Il peut vérifier le déplacement de la trace au-dessus des cellules capacitives à la manière du déplacement d'un curseur pour générer un signal de commande par exemple pour l'intensité de fonctionnement d'un appareil ou un signal de niveau de fonctionnement de l'appareil (vitesse de rotation, réglage de la température ou d'une durée).

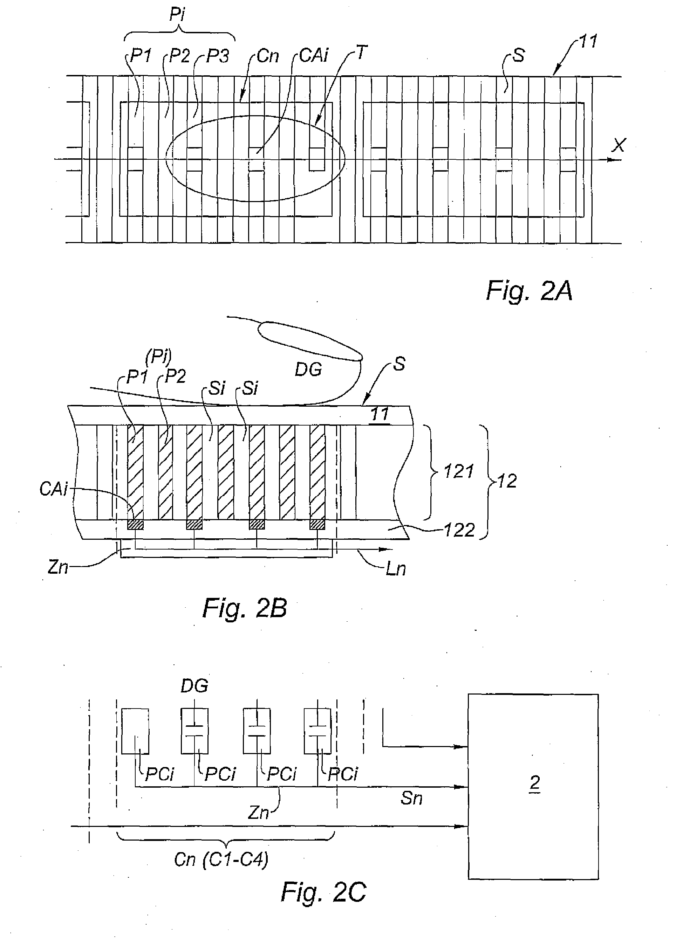

Les figures 2A-2C montrent de manière plus détaillée et à échelle agrandie, la structure du capteur capacitif 1 composé d'une couche isolante électrique 11 couvrant une couche capacitifve 12 reliée à un circuit de traitement 2.

La couche isolante électrique 11 forme la surface de détection S contre laquelle on applique le doigt à détecter. Cette surface de détection est munie de repères de positions par exemple représentés par les rectangles correspondant à des cellules capacitives Cn. La couche isolante électrique 11 peut être une couche en verre ou en tout matériau isolant électrique.

Selon les figures 2A, 2B, la couche capacitive 12 est un empilage 121 formé d'une alternance de tranches conductrices Pi et de tranches non-conductrices Si et les tranches conductrices Pi (P1, ..., P5) sont représentées avec des hachures. Cet empilage 121 est placé sur chant, c'est-à-dire que leur dessus des tranches vient sous la couche isolante 11 et leur dessous vient sur une surface d'appui et de connexion, par exemple une plaque de circuit imprimé 122 comportant des contacts CAi touchant certaines des tranches conductrices Pi. Bien que la figure 2B montre des contacts élémentaires CAi, associés exactement à une tranche conductrice, une telle précision n'est pas nécessaire et en réalité, le contact élémentaire CAi couvre plusieurs couches conductrices sans que cela ne modifie le résultat de l'analyse du signal globale.

Les contacts CAi ne s'étendent que sur une fraction de la longueur de la tranche (dimension prise perpendiculairement au plan de la figure 2B de sorte qu'en vue de dessus ces contacts élémentaires CAi apparaissent sous la forme de rectangles à la figure 2A).

La figure 2B montre de tels connecteurs élémentaires CAi reliés aux tranches P1, P3, P5, P7 alors que les tranches conductrices intermédiaires P2, P4, P6 ne sont pas mises en contact. Les tranches conductrices Pi forment des parties de condensateur PCi. Toutes les tranches Pi touchant les contacts CAi sont reliées au même connecteur de cellule Zn ayant une ligne de sortie Ln reliée au circuit de traitement 2.

Ce connecteur de cellule Zn et les tranches conductrices Pi associées forment une cellule capacitive Cn. Différentes cellules capacitives Cn (n=1 ...) se succèdent dans le capteur capacitif, par exemple suivant un alignement rectiligne comme celui présenté en vue de dessus à la figure 2A. La cellule est délimitée à la figure 2B par deux traits interrompus, verticaux.

Les contacts CAi et le connecteur de cellule Zn sont de préférence réalisés sous la forme d'un circuit imprimé portant l'empilage 121 ainsi que les composants tels que le circuit de traitement 2, le générateur 4 et l'afficheur 5.

La figure 2C montre le schéma équivalent d'une cellule capacitive Cn et des parties de condensateur PCi constituées chaque fois par une tranche conductrice P1, P3, P5, etc et le connecteur de cellule Zn réunissant toutes les parties de condensateur ainsi figurées. Dans cet exemple, il y a quatre parties de condensateur PCi (i=1-4).

Lorsqu'un doigt DG est appliqué sur la surface de détection S de la couche isolante 11 comme le montre la figure 2B (la trace T du doigt DG est représentée à la figure 2A), le doigt forme avec la couche isolante 11 et les parties de condensateur PCi, des condensateurs de capacité finie C2, C3, C4 puisque les tranches conductrices P3, P5, P7 sont couvertes par le doigt DG alors que la tranche P1 n'est pas au contact du doigt.

Dans ces conditions, la partie de condensateur PC1 a une valeur infinie de sorte que l'inverse de sa capacité est une valeur nulle. Par addition des capacités des condensateurs de la cellule Cn, on obtient le signal Sn représentant les capacités finies C2, C3, C4. Ainsi le signal est représentatif de la trace T du doigt DG sur la surface de détection du capteur. Il est exploité par le circuit de traitement 2 comme indiqué ci-dessus.

Ce signal est seulement représentatif de la longueur de la trace de doigt TR, ce qui peut être suffisant. Toutefois, il est préférable de lui associer un critère représentatif de la largeur de la trace du doigt.

Pour les besoins de la description de l'invention, le capteur capacitif a été représenté à une échelle très exagérée notamment pour la dimension des cellules capacitives P2. En général, une trace de doigt d'adulte couvre deux à trois cellules capacitives et les tranches conductrices. En fait, ces tranches sont extrêmement minces pour avoir une bonne résolution. De plus et comme cela sera vu ultérieurement, une cellule capacitive peut avoir non seulement une dimension dans la direction XX mais également une dimension transversale dans la direction YY.

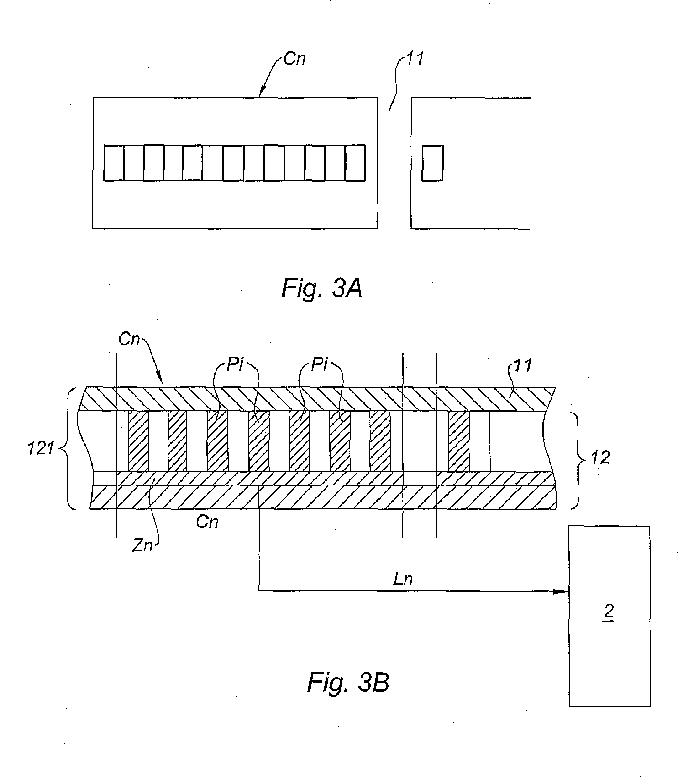

Les figures 3A, 3B montrent un autre mode de réalisation de l'invention représenté seulement par une cellule capacitive Cn en vue de dessus et en vue en coupe. Ces figures soulignent le mode de réalisation du connecteur de cellule Zn en forme de barrette longitudinale (direction XX) couvrant une certaine largeur des tranches Pi de l'empilage associées à une cellule capacitive. La largeur couverte par le connecteur élémentaire Zn donne en vue de dessus, les surfaces de contact rectangulaire entre les tranches conductrices Pi de l'empilage 121 (ces tranches sont représentées à la figure 3B mais non à la figure 3A) et le connecteur élémentaire Zn. Le connecteur élémentaire Zn de la cellule Cn est relié par la ligne Ln au circuit de traitement 2.

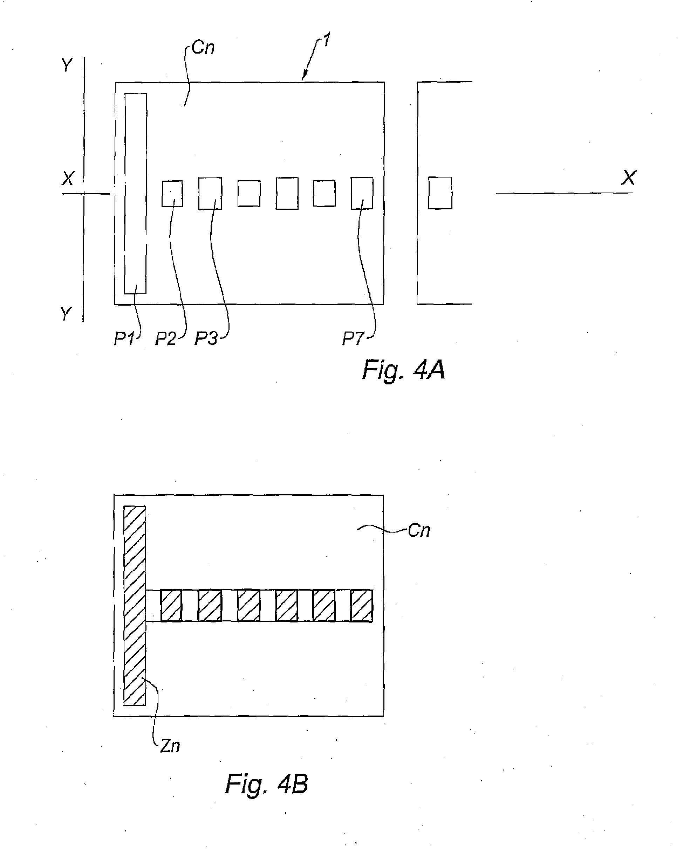

Les figures 4A, 4B montrent un autre mode de réalisation d'une cellule capacitive Cn d'un capteur 1 selon l'invention. Cette cellule Cn assure une détection dans deux directions, la direction de l'axe XX et la direction transversale YY. Pour cela, le connecteur de cellule Zn a une forme de T couché dont le contour apparaît en vue de dessus à la figure 4B.

La figure 4A ne montre que les surfaces de contact entre les tranches conductrices Pi et le connecteur de cellule Zn. La première tranche conductrice Pi a une surface de contact importante s'étendant dans la direction transversale YY alors que les autres tranches conductrices P2, ..., P7 ont des surfaces de contact relativement réduites comme celles déjà décrites ci-dessus. Dans ces conditions, la capacité du condensateur associé à la première tranche conductrice sera beaucoup plus importante si cette tranche est complètement couverte par la trace d'un doigt que la capacité associée aux différentes autres tranches conductrices. Le circuit de traitement connaît cette forme de connecteur élémentaire et interprétera la capacité de la cellule capacitive en fonction de cette capacité potentielle.

D'autres formes de connecteurs de cellule peuvent être envisagées avec des parties élargies réparties dans la cellule élémentaire.

## Revendications

1. Capteur capacitif pour détecter un doigt pour une opération de contrôle/de commande
**caractérisé en ce qu'**il comprend
A- une couche isolante électrique (11) formant une surface de détection (S) munie de repères de position pour y appliquer le doigt (DG) et induire un signal par positionnement ou déplacement du doigt,
B- une couche capacitive (12) couverte par la couche isolante (11) et formée d'un empilage (121) d'une alternance de tranches conductrices (Pi) et de tranches non-conductrices (Si) placées sur chant, au moins certaines des couches conductrices (Pi) étant reliées à des contacts élémentaires (CAi) pour former des parties de condensateurs (PCi), réparties en cellules (Cn), les contacts élémentaires (CAi) étant reliés en parallèle à un connecteur de cellule (Zn), une partie de condensateur élémentaire (PCi) étant complétée par la surface du doigt appliquée sur la couche isolante (11) pour former un condensateur, la capacité de tous les condensateurs d'une cellule étant additionnée dans le signal fourni par la cellule (Cn),
C- un circuit de traitement (2) auquel sont reliés les connecteurs de cellule (Zn) des cellules capacitives (Cn), recevant les signaux capacitifs (Sn) pour les évaluer, les comparer et déterminer s'ils correspondent à la présence d'un doigt, et déterminer la nature du doigt.

2. Capteur capacitif selon la revendication 1,
**caractérisé en ce que**
le circuit de traitement (2) n'exploite que les signaux venant de cellules adjacentes.

3. Capteur capacitif selon la revendication 1,
**caractérisé en ce que**
la couche isolante électrique (11) est une plaque de verre ou une couche de matériau isolant électrique.

4. Capteur capacitif selon la revendication 1,
**caractérisé en ce que**
l'empilage (121) de la couche capacitive formant l'organe de connexion (12) est un élastomère segmenté par des tranches conductrices (Pi).

5. Capteur capacitif selon la revendication 1,
**caractérisé en ce que**
les contacts élémentaires (CAi) sont fusionnés dans le connecteur (Zn) qui couvre et touche une succession de couches conductrices (Pi) d'une cellule (Cn).

6. Capteur capacitif selon la revendication 5,
**caractérisé en ce que**
le connecteur (Zn) a une extension longitudinale (XX) et une extension transversale (YY) dans une cellule (Cn).

7. Capteur capacitif selon la revendication 5,
**caractérisé en ce que**
les connecteurs (Zn) des cellules (Cn) sont identiques.

8. Capteur capacitif selon la revendication 5,
**caractérisé en ce que**
les connecteurs (Zn) des cellules (Cn) ont une surface identique.
